(19) Europäisches Patentamt / European Patent Office / Office européen des brevets

(11) **EP 3 545 631 B1**

(12) **FASCICULE DE BREVET EUROPEEN**

(45) Date de publication et mention de la délivrance du brevet:
**07.10.2020 Bulletin 2020/41**

(21) Numéro de dépôt: **17816921.5**

(22) Date de dépôt: **23.11.2017**

(51) Int Cl.:
*H04B 10/27* (2013.01)     *H04J 14/02* (2006.01)

(86) Numéro de dépôt international:
**PCT/FR2017/053238**

(87) Numéro de publication internationale:
**WO 2018/096286 (31.05.2018 Gazette 2018/22)**

(54) **DÉTERMINATION DE NOEUDS RELAIS RÉGÉNÉRATEURS COMPRIS DANS UNE LIGNE DE TRANSMISSION D'UN RÉSEAU OPTIQUE**

BESTIMMUNG VON REGENERATIVEN RELAISKNOTEN IN EINER ÜBERTRAGUNGSLEITUNG EINES OPTISCHEN NETZWERKS

DETERMINATION OF REGENERATIVE RELAY NODES INCLUDED IN A TRANSMISSION LINE OF AN OPTICAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2016 FR 1661501**

(43) Date de publication de la demande:
**02.10.2019 Bulletin 2019/40**

(73) Titulaire: **ORANGE**
**75015 Paris (FR)**

(72) Inventeurs:
• **KANJ, Matthieu**
**35510 Cesson Sévigné (FR)**
• **LE ROUZIC, Esther**
**92326 Châtillon Cedex (FR)**

(56) Documents cités:
**EP-A1- 2 200 204      EP-A1- 2 642 677**
**US-A1- 2003 011 844   US-A1- 2006 067 694**

• **NICOLA SAMBO ET AL: "Distributing Shared Regenerator Information in GMPLS-Controlled Translucent Networks", IEEE COMMUNICATIONS LETTERS, IEEE SERVICE CENTER, PISCATAWAY, NJ, US, vol. 12, no. 6, 1 juin 2008 (2008-06-01), pages 462-464, XP011216222, ISSN: 1089-7798**

## Description

## 1. DOMAINE DE L'INVENTION

Le domaine de l'invention est celui des réseaux de communication optique.

Plus précisément, l'invention concerne une technique de détermination de l'emplacement des régénérateurs optiques dans une ligne de transmission établie au sein d'un réseau optique.

L'invention peut s'appliquer à de nombreux réseaux optiques, comme par exemple les réseaux WDM (pour « Wavelength Division Multiplexing »), DWDM (pour « Dense Wavelength Division Multiplexing »), ainsi que les réseaux mettant en œuvre le protocole MPLS (pour « MultiProtocol Label Switching »), GMPLS (pour « Generalized MultiProtocol Label Switching »), SDN (« Software Defined Networking »).

## 2. ARRIÈRE-PLAN TECHNOLOGIQUE

Au cours de ces dernières années, les demandes et exigences croissantes en bande passante et en qualité de service des utilisateurs ont poussé les chercheurs à élaborer de nouvelles architectures et de nouveaux protocoles pour les réseaux de communication optique.

Les réseaux optiques sont destinés à interconnecter des dispositifs de communication par l'intermédiaire de nœuds optiques reliés entre eux par des liens optiques. Les signaux optiques sont véhiculés au travers des lignes de transmission pouvant atteindre par exemple plusieurs milliers de kilomètres. Typiquement, chaque ligne de transmission est établie entre un nœud émetteur (ou nœud source) et un nœud récepteur (ou nœud destinataire) via des nœuds relais (ou nœuds intermédiaires).

Lorsqu'un signal optique est envoyé sur une ligne de transmission, il subit un certain nombre de dégradations susceptibles de limiter les performances du réseau, notamment en termes de portée de transmission optique. Les principales sources de dégradation de la qualité du signal optique sont l'atténuation (due aux propriétés intrinsèques des fibres optiques), la distorsion (causée principalement par les effets de la dispersion et de la non-linéarité) et l'accumulation de bruit optique généré par les différents équipements optiques situés le long de la ligne de transmission.

Afin de surmonter les pertes de signal, les signaux optiques sont régulièrement régénérés le long de la ligne de transmission par des nœuds relais compris dans cette ligne de transmission. Pour effectuer une régénération d'un signal optique arrivant sur un nœud relais, ce dernier peut être équipé d'un module de conversion « OEO » (pour « Optique-Electrique-Optique ») fonctionnant selon le principe suivant : le signal optique réceptionné par le nœud relais est tout d'abord converti en signal électrique (on parle alors de conversion « Optique-Electrique » du signal) afin qu'il puisse subir un traitement électrique, puis le signal électrique traité est converti à nouveau en signal optique (on parle alors de conversion « Electrique-Optique » du signal) avant d'être réinjecté sur la ligne de transmission. Un nœud relais agit comme régénérateur optique lorsque le module de conversion OEO est activé et comme « simple relayeur » lorsque le module de conversion OEO est inactivé.

Les réseaux optiques traditionnels basés sur une architecture dite point-à-point font appel à une régénération du signal optique à chaque nœud relais du réseau (ces réseaux sont parfois qualifiés de réseaux « opaques »). Ainsi, tous les nœuds relais du réseau optique sont désignés pour effectuer une régénération du signal optique. Ce type d'architecture présente un coût non négligeable au regard du nombre de conversions « Optique-Electrique-Optique » mises en œuvre pour véhiculer les flux de données jusqu'aux nœuds destinataires.

Les opérateurs ont besoin de réseaux optiques moins coûteux et plus flexibles, dont la capacité peut être aisément augmentée en fonction de l'accroissement du trafic de données. Pour répondre à ce besoin, les réseaux optiques ont évolué de l'architecture point-à-point vers une architecture maillée translucide, où l'on cherche à minimiser le nombre de conversions « Optique-Electrique-Optique » (et donc le nombre de régénérations).

Dans un réseau optique transparent, un signal optique peut être transmis depuis un nœud émetteur jusqu'au nœud récepteur sans avoir besoin d'être régénéré à chaque nœud relais de la ligne de transmission.

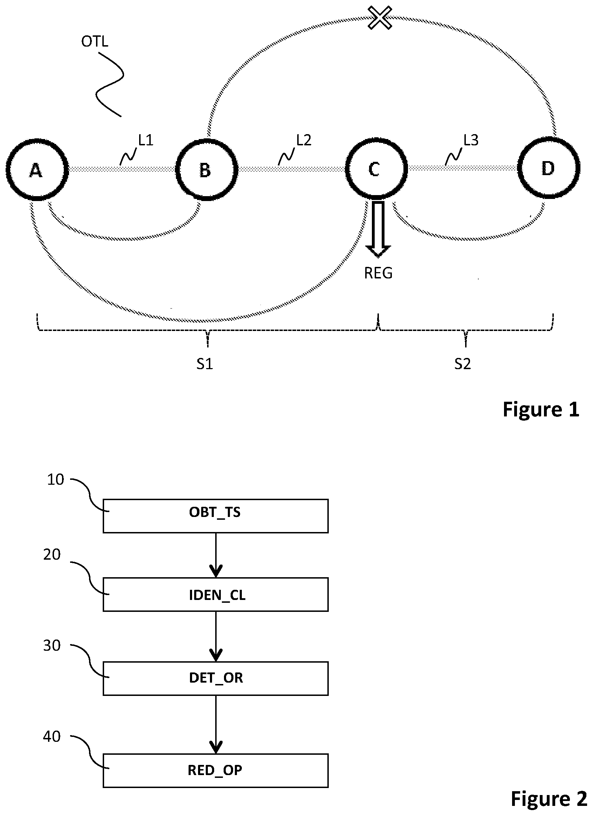

On connaît dans l'état de la technique des solutions pour déterminer de manière optimale les nœuds relais régénérateurs d'une ligne de transmission. Une solution connue est présentée ci-après en relation avec le schéma de la **figure 1.**

La figure 1 présente la structure simplifiée d'une ligne de transmission établie dans un réseau optique translucide, de type DWDM par exemple. La ligne de transmission 10 comprend un nœud émetteur A, un nœud récepteur D et deux nœuds relais B et C. La ligne de transmission comprend en outre une succession de trois liens optiques L1, L2, L3 reliant respectivement les nœuds successifs suivants : A - B, B - C et C - D. La ligne de transmission est par ailleurs composée d'une succession de deux segments transparents S1 et S2. Le segment transparent S1 comprend les nœuds d'extrémité A (émetteur) et B (relais), et le segment transparent S2 comprend les nœuds d'extrémité B (relais) et D (récepteur). Un segment transparent est une portion de la ligne de transmission comprenant un lien ou plusieurs liens successifs et délimitée par deux nœuds d'extrémité dont au moins un est un nœud relais régénérateur, et sur laquelle aucune conversion Optique-Electrique-Optique n'est effectuée entre les nœuds d'extrémité (autrement dit qui ne contient aucun nœud relais régénérateur entre les nœuds d'extrémité). Il s'agit donc d'un lien ou d'un ensemble de liens successifs à travers lequel aucune régénération optique n'est mise en œuvre entre les deux nœuds d'extrémité du segment transparent.

Il convient de noter que les nœuds relais de ligne de transmission sont tous potentiellement régénérateurs. Un nœud relais donné agira ou non comme régénérateur optique en fonction des segments transparents calculés.

La solution mise en œuvre ici pour déterminer le ou les nœuds relais régénérateurs parmi les nœuds relais de la ligne de transmission, consiste à exploiter la portée de transmission maximale du transpondeur compris dans le nœud émetteur A de façon à établir un nombre minimum de segments transparents (pour simplifier, on parlera dans la suite de « portée de transmission maximale du nœud émetteur »). De cette façon, le nombre de régénérations optiques nécessaires pour la transmission d'un signal optique depuis le nœud émetteur A jusqu'au nœud récepteur D peut être minimisé. Cette portée maximale dépend du réglage du transpondeur en terme de format de modulation, de débit symbole, de type de code correcteur d'erreur, entre autres.

La portée de transmission maximale du nœud émetteur est estimée sur la base d'un indicateur de qualité de transmission tel que le rapport signal à bruit optique, aussi appelé rapport OSNR (pour « Optical Signal to Noise Ratio » en anglais).

Les liaisons optiques physiquement réalisables sont les liaisons ayant les nœuds d'extrémité A-B, A-C, et C-D.

Comme illustré sur la figure 1, une transmission d'un signal optique n'est physiquement pas réalisable à travers un seul segment transparent dont les nœuds d'extrémité seraient A et D. Par conséquent, il est nécessaire d'effectuer une régénération optique au niveau d'au moins un des nœuds relais B et C afin de permettre la réception du signal optique côté récepteur avec un niveau de qualité acceptable. Il existe trois possibilités : une régénération au nœud B uniquement, une régénération au nœud C uniquement ou une régénération aux nœuds B et C. La première possibilité (régénération au nœud B uniquement) ne constitue pas une solution valide puisqu'un segment transparent avec les nœuds d'extrémité B et D n'est pas faisable dans la configuration illustrée ici à titre d'exemple. Les deux autres possibilités constituent des solutions valides mais la deuxième possibilité (régénération au nœud C uniquement) présente l'avantage d'offrir un schéma d'emplacement de régénérateurs avec un nombre plus restreint de nœuds relais régénérateurs. Les nœuds d'extrémité de la succession de segments transparents sont donc les nœuds A, C et D, dont seul le nœud C qui agit comme nœud relais régénérateur (noté « REG » sur la figure pour « régénération »). Le nœud B agit comme simple nœud relais non-régénérateur.

Cette solution connue, qui permet d'optimiser le nombre de régénérations optiques à mettre en œuvre sur une ligne de transmission, trouve toutefois ses limites notamment dans le cadre des réseaux translucides à grille flexible dans lesquels, pour une même largeur de bande spectrale, un nombre plus important de canaux optiques est mis en œuvre. En effet, un accroissement du nombre de canaux optiques a pour effet d'accroître d'autant la puissance optique injectée dans les liens optiques du réseau (par rapport aux réseaux conventionnels à grille fixe), pouvant engendrer un phénomène de saturation de puissance sur certains liens optiques. L'accroissement de la puissance injecté dans les liens optiques pourrait endommager certains équipements (tels que les amplificateurs optiques par exemple), comme ceux déjà déployés sur les lignes de transmission et dont les caractéristiques répondent aux exigences imposées par les réseaux conventionnels à grille fixe. Par ailleurs, le recours à des amplificateurs optiques plus puissants représente une mise en œuvre coûteuse pour les opérateurs.

Une technique d'adaptation de puissance optique connue de l'homme du métier, présentée dans l'article scientifique « On the Legacy Amplifier Limitation in Flexgrid Optical Networks » (Photonics in Switching Conference, 2015, D. Amar *et Al.*), repose sur l'utilisation de marges des rapports signal à bruit optiques calculées sur les liens optiques de la ligne de transmission afin de permettre une éventuelle réduction du niveau de puissance optique injectée dans les liens. Pour un lien optique donné, une marge de rapports signal à bruit optiques ($OSNR_{margin}$) est la différence entre le rapport signal à bruit optique estimé ou mesuré ($OSNR_{est}$) dudit lien et un rapport signal à bruit optique minimum acceptable ($OSNR_{mir}$). Plus la marge de rapports signal à bruit est importante et plus le niveau de puissance supportée par le lien peut être réduit.

Or l'utilisation de cette technique ne permet pas d'éviter de manière systématique le phénomène de saturation de puissance. Certaines configurations de routage notamment peuvent conduire, pour certains liens, à une sur-utilisation du nombre de canaux optiques, avec pour conséquence une saturation de puissance pour ces liens, voire un arrêt de la transmission optique sur la ligne de transmission comprenant ces liens.

Il existe donc un réel besoin de fournir une technique de détermination de nœuds relais régénérateurs d'une ligne de transmission optique, qui offre la possibilité de réduire de manière efficace les phénomènes de saturation de puissance optique.

## 3. EXPOSÉ DE L'INVENTION

Dans un mode de réalisation particulier de l'invention, il est proposé d'au moins un nœud relais régénérateur parmi une pluralité de nœuds relais compris dans une ligne de transmission optique entre un nœud émetteur et un nœud récepteur, ladite ligne de transmission comprenant une succession de liens reliant chacun deux nœuds successifs de la ligne de transmission, ledit procédé comprenant les étapes suivantes :

- identifier, parmi les liens de ladite ligne de transmission, un lien critique par analyse d'un niveau de puissance optique de chacun des liens ; et
- déterminer, en fonction du lien critique, au moins un nœud relais régénérateur au sein des nœuds d'extrémité délimitant les segments transparents d'une succession optimisée de segments transparents parmi une pluralité de successions possibles de segments transparents pour ladite ligne de transmission, chaque segment transparent comprenant un lien ou plusieurs liens successifs sans nœud relais régénérateur entre les liens successifs, ledit au moins un nœud relais régénérateur étant déterminé de telle sorte que le segment transparent comprenant le lien critique dans la succession optimisée de segments transparents présente un niveau de qualité de communication supérieur ou égal aux niveaux de qualité de communication des segments transparents comprenant le lien critique dans les successions possibles de segments transparents.

Ainsi, ce mode de réalisation particulier de l'invention repose sur une approche tout à fait nouvelle et inventive prenant en compte le niveau de puissance optique de chacun des liens de la ligne de transmission pour déterminer les nœuds relais régénérateur de la ligne de transmission. Le principe de l'invention consiste à déterminer parmi les nœuds relais compris dans une ligne de transmission le ou les nœuds relais régénérateurs en se basant sur une analyse du niveau de puissance optique de chacun des liens de la ligne et du niveau de qualité de communication de successions possibles de segments transparents de la ligne. Ainsi, en cherchant à déterminer ledit au moins un nœud relais régénérateur à travers un processus consistant à ce que le segment transparent comprenant le lien critique présente un niveau de qualité de communication supérieur ou égal à celui d'autres segments transparents possibles comprenant ce même lien, on obtient un schéma d'emplacement optimisé des nœuds régénérateurs permettant une meilleure gestion de la puissance optique consommée sur la ligne de transmission concernée. Ainsi, grâce à la présente invention, le risque de saturation de puissance au sein du réseau optique en termes de puissance optique s'en trouve diminué.

Selon un aspect particulier de l'invention, le procédé comprend une étape d'obtention d'un schéma d'emplacement prédéterminé de nœuds d'extrémité d'une première succession possible de segments transparents, ladite étape de détermination des nœuds d'extrémité étant effectuée en fonction dudit schéma d'emplacement prédéterminé.

L'emplacement du ou des nœuds relais régénérateurs de ce schéma d'emplacement prédéterminé peut être déterminé soit avec une technique connue de l'art antérieur (comme celle décrite en relation avec l'arrière-plan technologique de la présente invention), soit de manière aléatoire. Ainsi, dans ce cas particulier, la succession optimisée de segments transparents peut correspondre à une deuxième succession possible de segments transparents, potentiellement différente de la première succession possible découlant du schéma d'emplacement prédéterminée, cette deuxième succession possible de segments étant alors déterminée de telle sorte que le segment transparent comprenant le lien critique présente un niveau de qualité de communication supérieur ou égal à celui du segment transparent comprenant ce lien critique dans cette première succession (possible) de segments transparents.

Selon un aspect particulier de l'invention, ladite étape de détermination des nœuds d'extrémité est effectuée dans un sens ascendant et/ou un sens descendant de la ligne de transmission en fonction d'une position du lien critique dans la succession de liens compris dans la ligne de transmission.

La position du lien critique conditionne le point de départ ainsi que le sens de déroulement du processus de détermination des nœuds relais régénérateurs selon l'invention.

Selon une caractéristique particulière, ladite étape de détermination des nœuds d'extrémité est en outre effectuée en fonction d'un critère de qualité de communication. Dans un tel cas de figure, l'étape de détermination est typiquement effectuée de proche en proche, sur chacun des nœuds successifs de la ligne de transmission.

Selon une première mise en œuvre particulière, si le lien critique est positionné dans un segment transparent d'extrémité de la ligne de transmission comprenant ledit nœud émetteur, ladite étape de détermination des nœuds d'extrémité est effectuée dans le sens ascendant de la ligne de transmission.

Selon une autre mise en œuvre particulière, si le lien critique est positionné dans un segment transparent d'extrémité de la ligne de transmission comprenant ledit nœud récepteur, ladite étape de détermination des nœuds d'extrémité est effectuée dans le sens descendant de la ligne de transmission.

Selon une autre mise en œuvre particulière, si le lien critique est positionné dans un segment transparent intermédiaire de ladite succession de segments transparents, ladite étape de détermination des nœuds d'extrémité est effectuée dans le sens descendant puis dans le sens ascendant de la ligne de transmission.

Selon un aspect particulier de l'invention, le lien critique est le lien parmi les liens de la ligne de transmission ayant le niveau de puissance optique le plus élevé.

Selon un autre aspect particulier de l'invention, le niveau de qualité de communication d'un segment transparent est représenté par une marge de rapports signal à bruit dudit segment transparent.

Dans un autre mode de réalisation de l'invention, il est proposé un produit programme d'ordinateur qui comprend des instructions de code de programme pour la mise en œuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en œuvre le procédé précité (dans l'un quelconque de ses différents modes de réalisation).

Dans un autre mode de réalisation de l'invention, il est proposé un dispositif de détermination d'au moins un nœud relais régénérateur parmi une pluralité de nœuds relais compris dans une ligne de transmission optique entre un nœud émetteur et un nœud récepteur, ladite ligne de transmission comprenant une succession de liens reliant chacun deux nœuds successifs de la ligne de transmission, ledit dispositif étant caractérisé en ce qu'il comprend :

- des moyens d'identification, parmi les liens de ladite ligne de transmission, d'un lien critique par analyse d'un niveau de puissance optique de chacun des liens ; et
- des moyens de détermination, tenant compte du lien critique, au sein des nœuds d'extrémité délimitant les segments transparents d'une succession optimisée de segments transparents parmi une pluralité de successions possibles de segments transparents pour ladite ligne de transmission, chaque segment transparent comprenant un lien ou plusieurs liens successifs sans nœud relais régénérateur entre les liens successifs, ledit au moins un nœud relais régénérateur étant déterminé de telle sorte que le segment transparent comprenant le lien critique dans la succession optimisée de segments transparents présente un niveau de qualité de communication supérieur ou égal aux niveaux de qualité de communication des segments transparents comprenant le lien critique dans les successions possibles de segments transparents.

Avantageusement, le dispositif comprend des moyens de mise en œuvre des étapes qu'il effectue dans le procédé de détermination tel que décrit précédemment, dans l'un quelconque de ses différents modes de réalisation.

## 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1, déjà décrite en relation avec l'art antérieur, présente la structure simplifiée d'une ligne de transmission optique illustrant le principe de détermination des nœuds relais régénérateurs selon une solution connue de l'état de l'art ;

- la figure 2 présente un organigramme d'un mode de réalisation particulier du procédé selon l'invention ;
- les figures 3, 4 et 5 représentent de façon schématique le principe de détermination de nœuds relais régénérateurs conformément au procédé de l'invention décrit à la figure 2 ;
- les figures 6A à 6G représentent un exemple d'algorithme de mise en œuvre d'une méthode de détermination de nœuds relais régénérateurs selon un mode de réalisation particulier de l'invention ; et
- la figure 7 représente la structure simplifiée d'un dispositif de communication mettant en œuvre le procédé de détermination selon l'invention.

## 5. DESCRIPTION DÉTAILLÉE

Sur toutes les figures du présent document, les éléments et étapes identiques sont désignés par une même référence numérique.

Dans la suite de la description, on considère un exemple de mise en œuvre de l'invention au sein d'un réseau optique à grille flexible. L'invention ne se limite bien sûr pas à ce type particulier de réseau optique, et peut s'appliquer à tout type de réseau de communication optique ayant recours à des nœuds relais régénérateurs de signal optique.

La **figure 2** représente, de manière générique, un organigramme d'un mode de réalisation particulier du procédé de détermination selon l'invention.

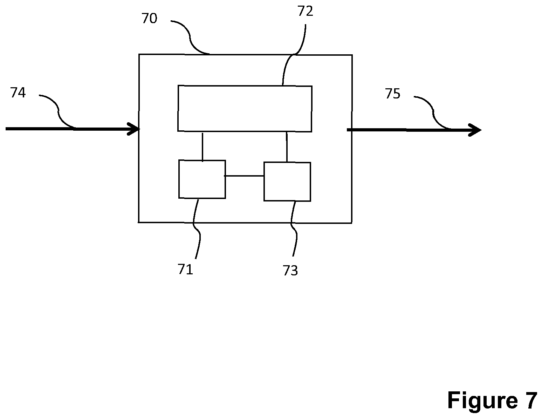

Cet organigramme comprend quatre étapes principales de mise en œuvre du procédé, qui sont appliquées à chaque fois qu'une ligne de transmission (ou un canal optique) entre un nœud émetteur et un nœud récepteur du réseau doit être établie. Ces étapes sont effectuées par un dispositif du réseau (dont le principe est décrit plus loin en relation avec la figure 7), tel que par exemple un dispositif gestionnaire central du réseau optique.

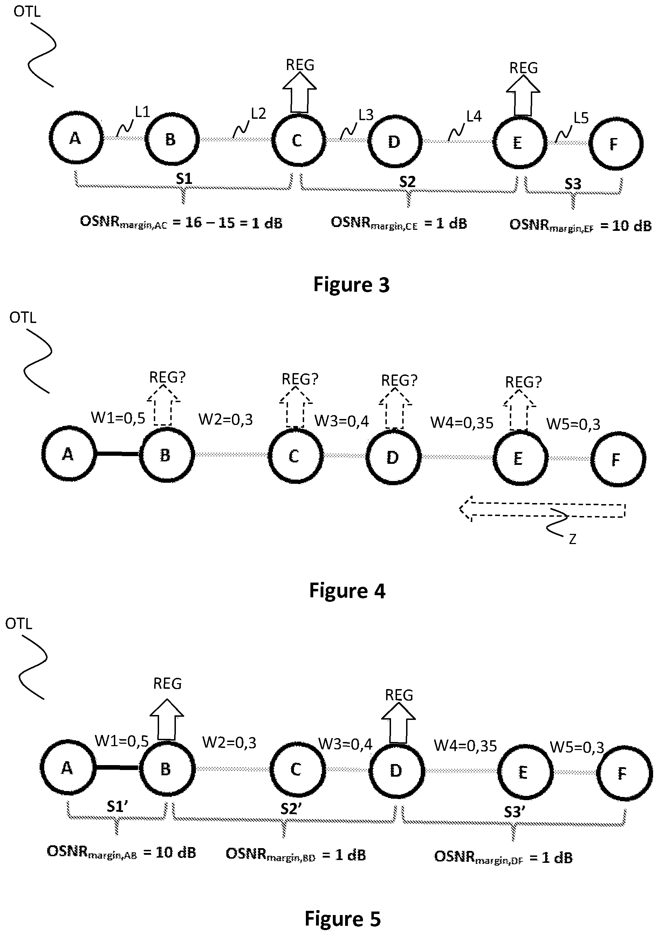

Comme illustré sur la **figure 3**, on considère que le procédé est mis en œuvre pour une ligne de transmission OTL à établir entre un nœud émetteur A et un nœud récepteur F. La ligne de transmission OTL comprend un ensemble de quatre nœuds relais B, C, D, E permettant de relayer les signaux optiques, depuis le nœud émetteur A jusqu'au nœud récepteur F, soit de manière transparente (c'est-à-dire sans régénération optique), soit de manière opaque ou translucide (c'est-à-dire avec régénération optique). La ligne de transmission OTL comprend ainsi une succession de cinq liens optiques L1, L2, L3, L4, L5 reliant respectivement les nœuds successifs A - B, B - C, C - D, D - E et E - F.

On rappelle ici que les nœuds relais B, C, D, E sont tous potentiellement régénérateurs, et seront activés comme tels en fonction des segments transparents calculés par le procédé de l'invention. En d'autre termes, chaque nœud relais B,C,D,E est sélectionnable pour agir, soit comme un nœud relais régénérateur impliquant une conversion optique-électrique-optique, soit comme un nœud relais non-régénérateur n'impliquant pas une telle conversion optique-électrique-optique.

Il est à noter qu'un segment transparent peut très bien comprendre un nœud relais pour lequel le module de conversion Optique-Electrique-Optique est activé pour la ligne de transmission concernée mais pour lequel il n'est pas activé pour une autre ligne de transmission du réseau dans laquelle ledit nœud relais est également impliqué.

La ligne de transmission OTL peut être par ailleurs décomposée en une succession de trois segments transparents S1, S2 et S3, chaque segment transparent étant délimité par deux nœuds d'extrémité dont au moins un est un nœud relais régénérateur, mais sans nœud relais régénérateur entre les deux nœuds d'extrémité. L'expression « sans nœud relais régénérateur entre les deux nœuds d'extrémité » signifie qu'aucune régénération optique n'est effectuée entre ces deux nœuds d'extrémité. Dans l'exemple illustré ici, les segments transparents S1, S2, S3 comprennent respectivement les nœuds d'extrémité A et C, C et E, et E et F. Les nœuds relais régénérateurs de la ligne OTL sont les nœuds C et D, et les nœuds relais non-régénérateurs sont les nœuds B et E.

A l'étape 10 (notée « OBT_TS ») du procédé, le dispositif gestionnaire peut obtenir un schéma prédéterminé d'emplacement des nœuds d'extrémités des segments d'une première succession possible de segments transparents de la ligne OTL. Ce schéma d'emplacement permet de savoir que la ligne OTL peut être décomposé en une succession possible de trois segments transparents S1, S2, S3 comprenant respectivement les nœuds d'extrémité A et C, C et E, et E et F, dont les nœuds relais régénérateurs sont les nœuds C et D, et les nœuds relais non-régénérateurs sont les nœuds B et E.

Ce schéma d'emplacement peut avoir été préalablement déterminé au moyen de techniques classiques bien connues de l'homme du métier, telle que celle décrite plus haut en relation avec l'arrière-plan technologique de l'invention, basée sur la portée maximale du nœud émetteur et le calcul des rapports signal à bruit optique (OSNR) des différents liens de la ligne OTL.

A titre d'alternative, on pourrait envisager que ce schéma d'emplacement soit déterminé de manière aléatoire, par exemple en fixant un nombre minimal, voire un nombre quelconque, de nœuds relais régénérateurs. Egalement à titre d'alternative, on pourrait envisager que les nœuds d'extrémité de la succession de segments transparents (y compris les nœuds relais régénérateurs) soient déterminés directement lors de l'étape 30 (décrite ci-dessous) sans recourir à un schéma d'emplacement prédéterminé.

A l'étape 20 (notée « IDEN_CL »), le dispositif gestionnaire identifie, parmi les liens L1 à L5 de la ligne OTL, le lien critique en effectuant une analyse du niveau de puissance optique de chacun des liens. Le dispositif gestionnaire possède pour cela une table locale de puissance, associée à la ligne OTL, dans laquelle est stockée, pour chaque lien de la ligne OTL, une valeur de paramètre Wi associée.

Le paramètre Wi est défini selon l'expression suivante :

$$Wi = P_{real,i}/P_{max,i} \quad (1)$$

avec :

P$_{real,i}$, le niveau de puissance optique courant du lien i,
P$_{max,i}$, le niveau de puissance maximale acceptable pour le lien i (correspondant une valeur seuil de puissance pour le lien i).

Les valeurs P$_{real,i}$ peuvent être obtenues par mesure ou bien par calcul en fonction du nombre de canaux optiques utilisés au sein du lien i. Les valeurs P$_{real,i}$ peuvent être mises à jour périodiquement (par exemple tous les n secondes) ou sur survenance d'un évènement prédéterminé (par exemple à l'établissement d'une nouvelle ligne de transmission ou connexion optique au sein du réseau afin de connaître les valeurs courantes de puissance optique des liens de la ligne OTL).

Selon une variante d'implémentation, au lieu de stocker les valeurs de paramètre Wi dans une table de stockage, les valeurs P$_{real,i}$ et P$_{max,i}$ pourraient être stockées dans deux tables de stockage locale distinctes, et le paramètre Wi calculé localement par le dispositif gestionnaire conformément à l'expression (1) ci-dessus. Selon une autre variante d'implémentation, les valeurs de puissance P$_{real,i}$ et P$_{max,i}$ ou du paramètre Wi peuvent être stockées dans un moyen de stockage distant du dispositif gestionnaire.

A noter que la façon dont les valeurs de puissance P$_{real,i}$ et P$_{max,i}$ ou de paramètre Wi sont obtenues, récupérées, puis stockées dans une table locale ou distante, dépend de l'architecture et du protocole de signalisation et de distribution de topologie mis en œuvre au sein du réseau optique.

Comme illustré sur la **figure** 4 à titre d'exemple, les liens L1, L2, L3, L4, L5 de la ligne OTL sont associés respectivement aux valeurs de paramètre suivantes : W1 = 0,5, W2 = 0,3, W3 = 0,4, W4 = 0,35, W5 = 0,3.

Ainsi, le dispositif gestionnaire peut déterminer par simple comparaison des valeurs du paramètre Wi stockées dans la table locale, le lien parmi les liens L1 à L5 présentant le niveau de puissance optique le plus élevé (c'est-à-dire le plus critique du point de vue puissance optique).

A l'issue de cette étape, le dispositif gestionnaire a identifié le lien L1 comme étant le lien critique de la ligne OTL.

A l'étape 30 (notée « DET_OR »), le dispositif gestionnaire détermine les nœuds relais régénérateurs parmi les nœuds d'extrémité d'une succession optimisée de segments transparents (cette succession optimisée faisant elle-même partie d'un ensemble de successions possibles de segments transparents pour la ligne OTL) en fonction du lien critique identifié à l'étape précédente, à savoir le lien L1. En d'autres termes, pour une ligne OLT pouvant présenter plusieurs successions possibles de segments transparents dont les nœuds d'extrémité sont autant de positions possibles pour les nœuds relais régénérateurs sur cette ligne OLT, on considère une succession particulière de segments (dite « optimisée ») parmi ces différentes successions possibles, les nœuds d'extrémité des segments transparents de cette succession optimisée déterminant les nœuds relais régénérateurs sur la ligne OLT.

Cette étape de détermination de nœuds relais régénérateurs est effectuée de sorte que, au sein de cette succession optimisée de segments transparents, le segment transparent $S_{L1}$ comprenant le lien critique L1 présente un niveau de qualité de communication supérieur ou égal au niveau de qualité de communication du ou des autre(s) segment(s) transparent(s) $S_{L1,POT}$ comprenant ce même lien critique L1 dans les autres successions possibles de segments transparents pour cette même ligne OTL.

Ainsi, dans le cas particulier où une première succession de segments a déjà été obtenue lors de l'étape 10, une succession optimisée de segments est alors déterminée de telle sorte que son segment comprenant le lien critique L1 présente un niveau de qualité de communication supérieur ou égal à celui du segment comprenant ce lien critique L1 dans la première succession de segments.

Dans le mode de réalisation particulier décrit ici, la succession optimisée de segments transparents est déterminée de sorte que son segment transparent comprenant le lien critique L1 présente un niveau de marge de rapports signal à bruit ($OSNR_{margin}$) le plus grand possible parmi tous les segments comprenant ce même lien L1 dans les autres successions alternatives de segments transparents.

Pour ce faire, différentes successions possibles de segments transparents sont passées en revue en considérant plus particulièrement, pour chacune de ces successions, le segment comprenant le lien critique L1 et plus précisément son niveau de qualité de communication. La succession de segments dont le segment comprenant le lien critique L1 présente le plus grand niveau de qualité de communication est alors considérée comme étant la succession optimisée de segments transparents, définissant un ensemble de nœuds d'extrémité entre ses segments transparents parmi lesquels choisir les nœuds relais régénérateurs de la ligne de transmission optique.

En particulier, les nœuds relais régénérateurs peuvent correspondre à l'ensemble des nœuds d'extrémité de la succession optimisée de segments transparents ainsi déterminée, à l'exception naturellement des nœuds émetteur (A sur la figure 3) et récepteur (F sur la figure 3) de la ligne OTL.

A noter que, dans ce mode de réalisation particulier, le dispositif gestionnaire effectue cette étape de détermination en tenant compte du schéma d'emplacement prédéterminé obtenu à l'étape 10 (c'est-à-dire en fonction des nœuds d'extrémité préalablement déterminés), ce qui revient à déterminer de nouveaux nœuds d'extrémité (et donc de nouveaux nœuds relais régénérateurs) de la succession de segments transparents en fonction du lien critique L1.

Cette étape consiste donc à redéfinir les nœuds d'extrémité de la succession de segments transparents en considérant que le niveau de qualité de communication du segment transparent qui comprend le lien le plus critique sur la ligne OTL doit être maximisé. Le principe est que la puissance optique d'un lien de la ligne OTL peut d'autant plus être atténuée que ce lien présente une marge de rapports signal à bruit élevée. La nouvelle succession de segments transparents ainsi déterminée offre la possibilité de mieux répartir la puissance optique sur certains liens de la ligne OTL (d'où la notion de « succession optimisée » de segments transparents).

Le niveau de qualité de communication utilisé ici peut être avantageusement représenté par la marge de rapports signal à bruit, qui est un paramètre fonctionnant dans tous les cas de figure, y compris lorsque le taux d'erreurs est trop bas pour être mesuré. Le niveau de qualité de communication des segments transparents peut ainsi être caractérisé notamment au moyen du rapport signal à bruit optique (« OSNR ») estimé pour ces segments transparents. Le dispositif gestionnaire possède pour cela une table locale, associée à la ligne OTL, dans laquelle est stockée, pour chaque lien Li de la ligne OTL, une valeur de rapport $OSNR_i$ associée.

Les valeurs $OSNR_i$ peuvent être statiques, être mises à jour périodiquement (par exemple tous les n secondes) ou être mises à jour sur survenance d'un évènement prédéterminé (par exemple à l'établissement d'une nouvelle ligne de transmission au sein du réseau afin de connaître les valeurs courantes de OSNR des liens de la ligne OTL).

Selon une variante d'implémentation, les valeurs de OSNR peuvent être stockées dans une table de stockage distante du dispositif gestionnaire.

A noter que la façon dont les valeurs de OSNR sont obtenues, récupérées, puis stockées dans une table locale ou distante, dépend de l'architecture et du protocole de signalisation et de distribution de topologie mis en œuvre au sein du réseau optique.

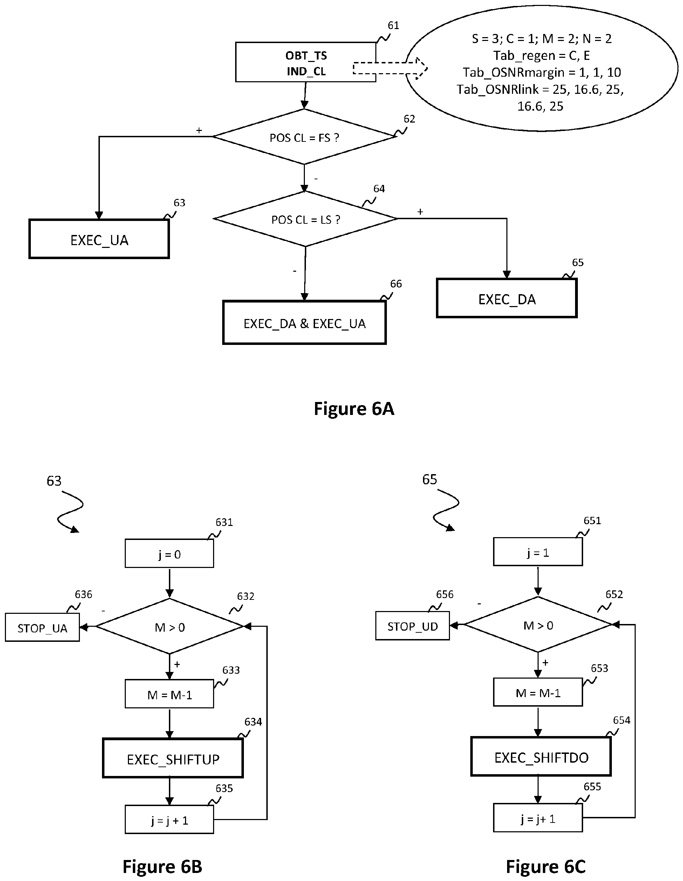

Dans cette étape, le dispositif gestionnaire identifie au préalable la position du lien critique L1 dans la succession de liens compris dans la ligne OTL. En effet, la position du lien critique conditionne le point de départ ainsi que le sens de déroulement du processus de détermination des nœuds relais régénérateurs. Le processus de détermination des nœuds relais régénérateurs peut être effectué dans le sens ascendant (« upstream ») et/ou dans le sens descendant (« downstream ») de la ligne OTL. Cet aspect est plus amplement discuté ci-après en relation avec les figures 6A-6G.

Sur l'exemple des figures 3 et 4, le lien critique L1 est le premier lien de la ligne OTL d'un point de vue descendant de la ligne OTL. Le processus de détermination est donc mis en œuvre sur la base des critères de mise en œuvre suivants : le point de départ est défini au nœud d'extrémité aval de la ligne OTL (le nœud récepteur F) et le sens de déroulement est effectué en sens amont (c'est-à-dire vers le nœud émetteur A), selon la flèche en pointillé référencée « Z ». Les nœuds d'extrémité sont ensuite déterminés de proche en proche et de façon séquentielle en testant chaque nœud relais B, C, D, E de la ligne OTL. Un exemple détaillé de mise en œuvre de cette étape de détermination est illustré ci-après en relation avec les figures 6A-6G.

A l'issue de cette étape 30, on obtient un schéma d'emplacement optimisé des nœuds d'extrémité de la succession de segments transparents, tel qu'illustré sur la **figure 5**, dont les nœuds relais régénérateurs. Les segments transparents déterminés sont référencés S1', S2' et S3' et sont délimités respectivement par les nœuds d'extrémité A et B, B et D, et D et F. Les nœuds relais régénérateurs de la ligne OTL (« REG ») sont alors les nœuds B et D, et les nœuds relais non-régénérateurs sont les nœuds C et E.

On rappelle ici que la marge de rapports signal à bruit optiques $OSNR_{margin}$ est la différence entre le rapport signal à bruit optique estimé ou mesuré $OSNR_{est}$ du segment concerné (pouvant comprendre un ou plusieurs liens) et le rapport signal à bruit optique minimum acceptable du point de vue d'un nœud récepteur $OSNR_{min}$.

On considère par exemple un rapport signal à bruit optique minimum acceptable $OSNR_{min}$ égal à 15 dB et un rapport signal à bruit optique estimé $OSNR_{est}$ pour les segments transparents AB, BD et DF égal respectivement à 25 dB, 16 dB et 16 dB. En comparant avec le schéma d'emplacement prédéterminé de la figure 3, le segment transparent S1', qui contient le lien critique L1, présente une marge de rapport signal à bruit $OSNR_{margin}$ de 10 dB, alors que le segment transparent S1, qui contenait ce même lien critique L1, présentait une différence de rapport signal à bruit $OSNR_{margin}$ de 1 dB seulement. Ainsi, grâce au procédé de l'invention, il possible de réduire davantage la puissance optique supportée par lien critique L1, et donc de réduire le risque de saturation de puissance sur les lignes de transmission du réseau optique.

A l'étape 40 (« RED_OP »), le dispositif gestionnaire peut ensuite décider de réduire le niveau de puissance optique injectée dans le lien L1, en fonction de la marge de rapport signal à bruit ($OSNR_{margin}$) qu'offre désormais le nouveau segment transparent S1'.

On présente maintenant, en relation avec les **figures 6A à 6G**, un exemple d'algorithme de mise en œuvre du processus de détermination des nœuds relais régénérateurs selon un mode de réalisation particulier de l'invention. On considère à nouveau que l'algorithme est mis en œuvre par un dispositif gestionnaire du réseau optique dans le cas de l'exemple des figures 3, 4, 5.

Lors de l'étape 61, le dispositif gestionnaire obtient un schéma prédéterminé d'emplacement de nœuds d'extrémité, y compris les nœuds relais régénérateurs, de la succession de segments transparents (comme expliquée plus haut en relation avec l'étape 10 de la figure 2). Puis le dispositif gestionnaire identifie le lien critique « CL » (pour « Critical Link ») et sa position dans la ligne OTL (comme expliquée plus haut en relation avec l'étape 20 de la figure 2).

A noter que dans le cas particulier où le dispositif gestionnaire identifie, après avoir obtenu le niveau de puissance optique des liens de la ligne OTL, deux (ou plus) liens critiques potentiels dont le niveau de puissance est identique (par exemple les liens L1 et L3 avec W1 = W3), celui-ci sélectionne aléatoirement l'un des deux liens critiques potentiels comme lien critique « CL » à prendre en compte pour la suite de l'algorithme.

Le dispositif gestionnaire définit ensuite les données de départ suivantes, en fonction des informations reçues de l'étape 61 précédente :

- le nombre S de segments transparents de la ligne OTL S (ici S = 3) ;
- l'indice C du segment transparent comprenant le lien critique (ici C = 1) d'un point de vue descendant de la ligne OTL ;
- le nombre M de segment(s) transparent(s) descendant(s) par rapport au segment transparent comprenant le lien critique (ici M = S - C = 2) ;
- le nombre N de nœuds relais régénérateurs de la ligne OTL (ici N = 2) ;
- une table Tab_regen relatives aux nœuds relais régénérateurs courants (Tab_regen = C, E) ;
- une table Tab_OSNRmargin relatives aux marges de rapports signal à bruit optique courantes des segments transparents (Tab_OSNRmargin = 1, 1, 10 par exemple) ;
- une table Tab_OSNRlink relatives aux rapports signal à bruit optique (exprimés en dB par exemple) courants des différents liens de la ligne OTL (Tab_OSNRlink = 25, 16.6, 25, 16.6, 25 par exemple) ;
- la liste des nœuds de la ligne OTL (A-B-C-D-E-F par exemple sur la figure 3).

L'étape 62 permet de déterminer si le lien critique « CL » (pour « Critical Link ») fait partie du premier segment transparent « FS » (pour « First Segment ») de la succession de segments transparents, d'un point de vue descendant (le premier segment transparent correspond au segment transparent d'extrémité amont de la ligne OTL (comprenant le nœud émetteur A)). Si c'est le cas, l'étape 63 est exécutée. Sinon, l'algorithme passe à l'étape 64.

L'étape 64 permet de déterminer si le lien critique « CL » (pour « Critical Link ») fait partie du dernier segment transparent « LS » (pour « Last Segment ») de la succession de segments transparents, d'un point de vue descendant (le dernier segment transparent correspond au segment transparent d'extrémité aval de la ligne OTL (comprenant le nœud récepteur F). Si c'est le cas, l'étape 65 est exécutée. Sinon, c'est l'étape 66 qui est exécutée.

L'étape 63 fait appel à la fonction algorithmique EXEC_UA (pour « Upstream Algorithm ») pour mettre en œuvre un processus de détermination dans le sens ascendant de la ligne de transmission OTL en partant du dernier lien L5 (le détail de l'algorithme associée à cette fonction est décrit ci-dessous en relation avec la figure 6B). Ceci correspondant au cas de la figure 4 décrit ci-dessus.

L'étape 65 fait appel à la fonction algorithmique EXEC_DA (pour « Downstream Algorithm ») pour mettre en œuvre un processus de détermination dans le sens descendant de la ligne de transmission OTL en partant du premier lien L1 (le détail de l'algorithme associée à cette fonction est décrit ci-dessous en relation avec la figure 6C).

L'étape 66 fait appel à la fonction algorithmique EXEC_DA (pour « Downstream Algorithm ») pour mettre en œuvre le processus de détermination dans le sens descendant de la ligne de transmission OTL, puis à la fonction algorithmique EXEC_UA pour mettre en œuvre le processus de détermination dans le sens ascendant de la ligne de transmission OTL en tenant compte des données sortantes de la fonction algorithmique EXEC_DA. L'étape 66 est exécutée lorsque le lien critique n'appartient à aucun segment transparent d'extrémité de la ligne de transmission.

On décrit maintenant l'algorithme de la **figure 6B** (EXEC_UA) qui permet de tester de proche en proche, dans le sens ascendant de la ligne OTL, les différents nœuds relais régénérateurs potentiels de la ligne OTL.

A l'étape 631, la variable entière j est initialisée avec la valeur 0. Cette variable j est utilisée pour parcourir et sélectionner dans le sens ascendant les différents nœuds relais régénérateurs potentiels de la ligne OTL stockés dans le tableau Tab_regen (par exemple, quand j = 0, N-j = 2 donc la table Tab_regen [2] = E). Cela permet d'indiquer quel nœud relais successif dans le sens ascendant est à prendre en compte comme site de régénération potentiel pour la suite de l'algorithme. Puis, l'étape 632 est mise en œuvre pour vérifier que le nombre M de segment(s) transparent(s) descendant(s) par rapport au segment transparent comprenant le lien critique est strictement supérieur à 0. Ainsi, tant que cette condition est remplie (M > 0), les étapes 633, 634, 635 sont exécutées. Sinon, si M = 0, l'algorithme effectue une transition à l'étape 636 correspondant à la fin d'exécution de la fonction EXEC_UA (« STOP_UA »).

L'étape 633 consiste à décrémenter la valeur de M de la valeur 1 (M = M - 1) pour décrémenter le nombre de segment(s) descendant(s) par rapport au segment transparent contenant le lien critique.

L'étape 635 consiste à incrémenter la valeur de j de la valeur 1 (j = j + 1) afin de tester un nouveau nœud relais régénérateur potentiel de la ligne OTL tant que le nombre M de segment(s) transparent(s) descendant(s) est supérieur à 0.

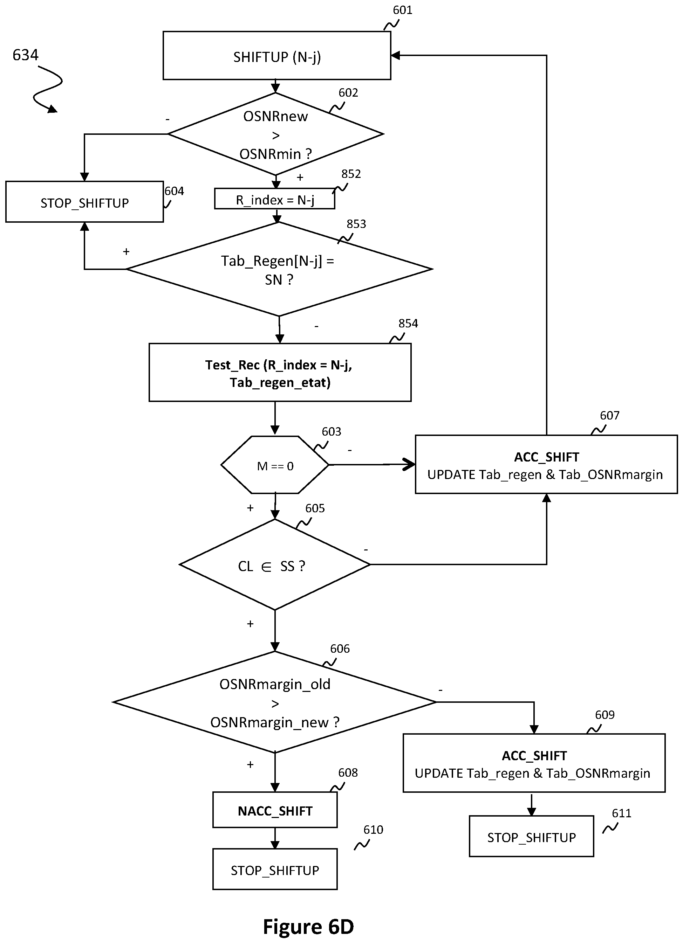

L'étape 634 consiste à exécuter la fonction algorithmique EXEC_SHIFTUP dont le détail est illustré ci-après en relation avec la **figure 6D.**

A l'étape 601, le dispositif gestionnaire effectue un décalage du site de régénération optique dans le sens ascendant de la ligne OTL en considérant N-j pour pointer sur le nœud stocké dans la table Tab_regen tel que Tab_regen [N-j], afin de tester un nouveau nœud relais régénérateur potentiel de la ligne OTL. Typiquement, si le nœud relais régénérateur potentiel précédent est le nœud E, le nœud relais successif suivant le nœud E dans le sens ascendant, c'est-à-dire le nœud D, est sélectionné en tant que nœud relais régénérateur potentiel courant.

L'étape 602 consiste à vérifier si la valeur du rapport signal à bruit optique du segment transparent courant (OSNRnew) (intégrant le nœud relais régénérateur potentiel courant comme nœud d'extrémité dudit segment) est supérieure à la valeur seuil du rapport signal à bruit optique minimum acceptable (OSNRmin). En d'autres termes, lorsque par exemple la valeur seuil du rapport signal à bruit optique minimum acceptable est égale à 15 dB, cette étape consiste à vérifier si la valeur OSNRnew du segment transparent courant DF est plus grande que 15 dB.

Si c'est le cas, l'algorithme passe à l'étape 852. Sinon l'algorithme passe à l'étape de fin d'exécution 604 (STOP_SHIFTUP).

L'étape 852 consiste à affecter la valeur N-j dans la variable notée R_index. L'algorithme passe ensuite à l'étape 853.

L'étape 853 consiste à tester si le nœud relais régénérateur potentiel courant correspond au nœud émetteur (SN pour « Sender Node », qui correspond au nœud A sur les figures 3-4). Si c'est le cas, l'algorithme passe à l'étape de fin d'exécution 604 (STOP_SHIFTUP). Sinon l'algorithme passe à l'étape 854.

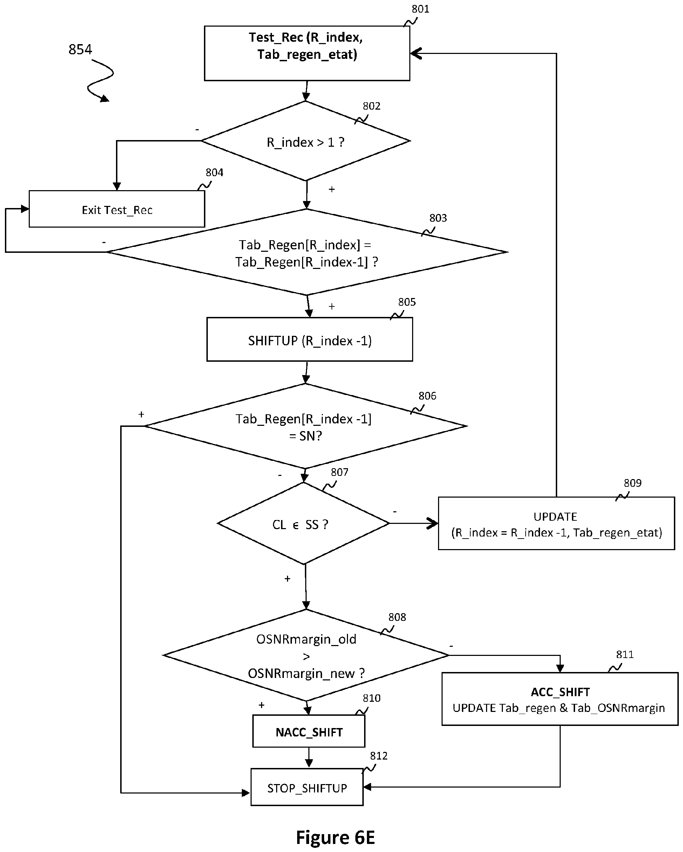

L'étape 854 consiste à exécuter la fonction algorithmique Test_Rec dont le détail est illustré ci-après en relation avec la **figure 6E.** L'étape 854 consiste à tester si le nœud relais régénérateur potentiel courant correspond à un nœud qui est déjà assigné comme nœud relais régénérateur (on parle alors de « recouvrement » de nœuds).

A l'étape 801 de la figure 6E, la fonction algorithmique prend comme paramètres la variable R_index et la table Tab_Regen_etat. La variable R_index contient la valeur N-j affectée à l'étape 852 et la table Tab_Regen_etat contient une donnée relative à l'état de la table Tab_Regen après le décalage du site de régénération optique effectué à l'étape 601.

L'étape 802 consiste à tester si la valeur affectée à la variable R_index est plus grande que 1 (R_index > 1). Si c'est le cas, l'algorithme passe à l'étape 803. Sinon, l'algorithme passe à l'étape 804.

A l'étape 804, l'exécution de la fonction Test_Rec est arrêté (« Exit Test_Rec ») et l'algorithme passe donc à l'étape 603 de la figure 6D).

L'étape 803 consiste à tester si la valeur indiquée dans la table Tab_Regen pour la variable R_index (N-j) est égale a à la valeur indiquée dans la table Tab_Regen pour la variable R_index-1 (N-j-1) (Tab_Regen [R_index] = Tab_Regen [R_index-1]. Cette étape permet de tester si le nœud relais régénérateur potentiel courant correspond à un nœud relais déjà assigné comme régénérateur). Si c'est le cas, l'algorithme passe à l'étape 805. Sinon, l'algorithme passe à l'étape 804 de fin d'exécution de la fonction Test_Rec.

A l'étape 805, le dispositif gestionnaire effectue un décalage du site de régénération optique dans le sens ascendant de la ligne OTL en considérant la variable R_index - 1 (c'est-à-dire N-j - 1) pour pointer sur le nœud stocké dans la table Tab_regen tel que Tab_regen [R_index - 1], afin de tester un nouveau nœud relais régénérateur potentiel de la ligne OTL tout en évitant le recouvrement de nœuds détecté à l'étape 803.

L'étape 806 consiste à tester si le nœud relais régénérateur courant potentiel (N-j - 1) correspond au nœud émetteur (SN pour « Sender Node »). Si c'est le cas, tous les nœuds potentiels testés depuis l'étape 601 ne sont pas pris en compte, et l'algorithme passe à l'étape 812 de fin d'exécution de la fonction EXEC_SHIFTUP (STOP_SHIFTUP). Sinon, l'algorithme passe à l'étape 807.

L'étape 807 consiste à tester vérifier si le lien critique « CL » fait partie du même segment transparent « SS » (pour « Same Segment ») ou si le lien critique a changé de segment transparent lors de l'exécution de l'étape 805. Si c'est le cas, l'algorithme passe à l'étape 808 dans laquelle un autre test est effectué, sinon il passe à l'étape 809 dans laquelle le décalage ascendant du site de régénération initié à l'étape 805 est accepté (la valeur de la variable R_index étant décrémentée de 1). Les paramètres R_index et Tab_regen_etat sont alors mis à jour en tenant compte du nouveau nœud relais régénérateur courant. Et l'algorithme retourne à l'étape 801 pour initier un nouveau test de recouvrement en tenant compte des paramètres mises à jour. La table Tab_Regen_etat contient une donnée relative au nouvel état courant de la table Tab_Regen après mise à jour (c'est-à-dire tenant compte du décalage effectué à l'étape 805).

L'étape 808 consiste à vérifier si la marge du rapport signal à bruit optique (OSNRmargin_old) obtenue pour le segment transparent précédent incluant le lien critique est supérieure à celle obtenue pour le segment transparent courant incluant le lien critique (OSNRmargin_new) après le décalage. Si c'est le cas, alors l'algorithme passe à l'étape 810 dans laquelle le ou les décalage(s) ascendant(s) du site de régénération optique initié(s) depuis l'étape 601 n'est (ne sont) pas accepté(s) et l'algorithme passe à l'étape 812 de fin d'exécution de la fonction EXEC_SHIFTUP exécutée à l'étape 634. Sinon l'algorithme passe à l'étape 811 dans laquelle le ou les décalage(s) ascendant(s) du site de régénération initié(s) depuis l'étape 601 est (sont) accepté(s) et les tables Tab_regen et Tab_OSNRmargin sont mises à jour en tenant compte du nouveau nœud régénérateur courant, et l'algorithme passe à l'étape 812 de fin d'exécution de la fonction EXEC_SHIFTUP exécutée à l'étape 634.

En revenant à présent à la figure 6D, l'étape 603 consiste à tester le cas particulier où la valeur de la variable M est égale à 0. Si M est égale à 0, l'algorithme passe à l'étape 605. Si non il passe à l'étape 607.

L'étape 605 consiste à vérifier si le lien critique « CL » fait partie du même segment transparent « SS » (pour « Same Segment ») ou si le lien critique a changé de segment transparent lors de l'exécution de fonction algorithmique EXEC_SHIFTUP (étape 634). Si c'est le cas, l'algorithme passe à l'étape 606 dans laquelle un autre test est effectué, sinon il passe à l'étape 607 dans laquelle le décalage ascendant du site de régénération initié à l'étape 601 est accepté. Les tables Tab_regen et Tab_OSNRmargin sont alors mises à jour en tenant compte du nouveau nœud relais régénérateur courant, et l'algorithme retourne à l'étape 601 pour initier un nouveau décalage ascendant du site de régénération potentiel.

L'étape 606 consiste à vérifier si la marge du rapport signal à bruit optique (OSNRmargin_old) obtenue pour le segment transparent précédent incluant le lien critique est supérieure à celle obtenue pour le segment transparent courant incluant le lien critique (OSNRmargin_new) après le décalage. Si c'est le cas, alors l'algorithme passe à l'étape 608 dans laquelle le décalage ascendant du site de régénération initié à l'étape 601 n'est pas accepté. Sinon l'algorithme passe à l'étape 609 dans laquelle le décalage ascendant du site de régénération initié à l'étape 601 est accepté et les tables Tab_regen et Tab_OSNRmargin mises à jour en tenant compte du nouveau nœud relais régénérateur courant. A l'issue de l'étape 608, l'algorithme passe dans l'étape 610 de fin d'exécution de l'étape 634 (fonction EXEC_SHIFTUP). De même, à l'issue de l'étape 609, l'algorithme passe dans l'étape 611 de fin d'exécution de l'étape 634 (fonction EXEC_SHIFTUP).

On décrit maintenant l'algorithme de la **figure 6C** (EXEC_DA) qui permet de tester de proche en proche, dans le sens descendant de la ligne OTL, les différents nœuds relais régénérateurs potentiels de la ligne OTL.

A l'étape 651, la variable entière, j, est initialisée avec la valeur 1. Cette variable j est utilisée pour parcourir et sélectionner dans le sens descendant les différents nœuds relais régénérateurs potentiels de la ligne OTL stockés dans le tableau Tab_regen. Cela permet d'indiquer quel nœud relais successif dans le sens descendant est à pris en compte comme site de régénération potentiel pour la suite de l'algorithme.

Les étapes 652, 653, 655 et 656 sont identiques aux étapes 632, 633, 635 et 636 de la figure 6B (EXEC_UA).

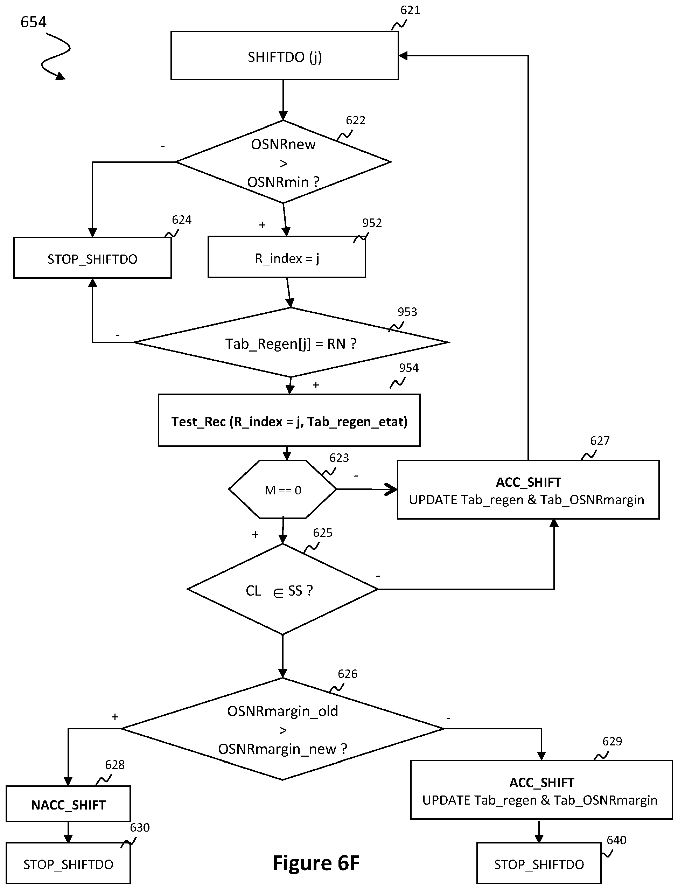

L'étape 654 consiste à exécuter la fonction algorithmique EXEC_SHIFTDO dont le détail est illustré ci-après en relation avec la **figure 6F.**

A l'étape 621, le dispositif gestionnaire effectue un décalage du site de régénération optique dans le sens descendant de la ligne OTL en prenant en compte la valeur de la variable j, afin de tester un nouveau nœud relais régénérateur potentiel de la ligne OTL. Typiquement, si le nœud relais régénérateur potentiel précédent est le nœud B, le nœud relais successif suivant le nœud B dans le sens descendant, c'est-à-dire le nœud C, est sélectionné en tant que nœud relais régénérateur potentiel courant.

L'étape 622 consiste à vérifier si la valeur du rapport signal à bruit optique du segment transparent courant (OSNRnew) (intégrant le nœud relais régénérateur potentiel courant comme nœud d'extrémité dudit segment) est supérieure à la valeur seuil du rapport signal à bruit optique minimum acceptable (OSNRmin) (valeur seuil égale à 15 dB par exemple).

Si c'est le cas, l'algorithme passe à l'étape 952. Sinon l'algorithme passe à l'étape de fin d'exécution 624 (STOP_SHIFTDO).

L'étape 952 consiste à affecter la valeur j dans la variable R_index. L'algorithme passe ensuite à l'étape 953.

L'étape 953 consiste à tester si le nœud relais régénérateur potentiel courant correspond au nœud récepteur (RN pour « Receiver Node », qui correspond au nœud F sur les figures 3-4). Si c'est le cas, l'algorithme passe à l'étape de fin d'exécution 624 (STOP_SHIFTDO). Sinon l'algorithme passe à l'étape 954.

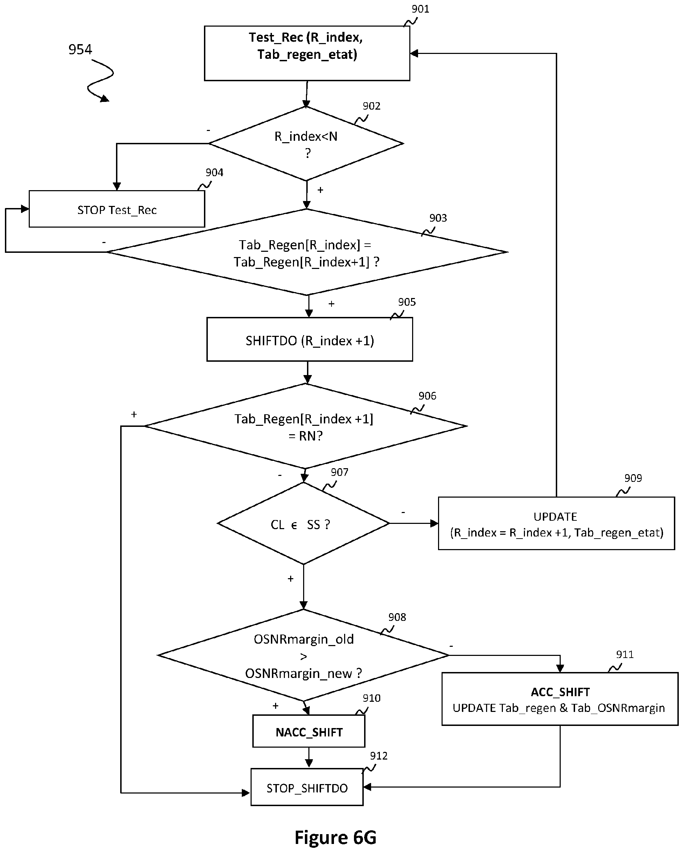

L'étape 954 consiste à exécuter la fonction algorithmique Test_Rec dont le détail est illustré ci-après en relation avec la **figure 6G.** L'étape 954 consiste à tester si le nœud relais régénérateur potentiel courant correspond à un nœud qui est déjà assigné comme nœud relais régénérateur (on parle alors de « recouvrement » de nœuds).

A l'étape 901 de la figure 6G, la fonction algorithmique prend comme paramètres la variable R_index et la table Tab_Regen_etat. La variable R_index contient la valeur j affectée à l'étape 952 et la table Tab_Regen_etat contient une donnée relative à l'état de la table Tab_Regen après le décalage du site de régénération optique effectué à l'étape 621.

L'étape 902 consiste à tester si la valeur affectée à la variable R_index est plus petite que le nombre N (R_index < N). Si c'est le cas, l'algorithme passe à l'étape 903. Sinon, l'algorithme passe à l'étape 904.

A l'étape 904, l'exécution de la fonction Test_Rec est arrêté (« Exit Test_de_Rec ») et l'algorithme passe donc à l'étape 623 de la figure 6G).

L'étape 903 consiste à tester si la valeur indiquée dans la table Tab_Regen pour la variable R_index (j) est égale a à la valeur indiquée dans la table Tab_Regen pour la variable R_index+1 (j+1) (c'est-à-dire si Tab_Regen [R_index] = Tab_Regen [R_index+1]). Cette étape permet de tester si le nœud relais régénérateur potentiel courant correspond à un nœud relais déjà assigné comme régénérateur). Si c'est le cas, l'algorithme passe à l'étape 905. Sinon, l'algorithme passe à l'étape 904 de fin d'exécution de la fonction Test_Rec.

A l'étape 905, le dispositif gestionnaire effectue un décalage du site de régénération optique dans le sens descendant de la ligne OTL en considérant la variable R_index +1 (c'est-à-dire j+1) pour pointer sur le nœud stocké dans la table Tab_regen tel que Tab_regen [R_index + 1], afin de tester un nouveau nœud relais régénérateur potentiel de la ligne OTL tout en évitant le recouvrement de nœuds détecté à l'étape 903.

L'étape 906 consiste à tester si le nœud relais régénérateur courant potentiel (j+1) correspond au nœud récepteur (RN pour « Receiver Node »). Si c'est le cas, tous les nœuds potentiels testés depuis l'étape 621 ne sont pas pris en compte, et l'algorithme passe à l'étape 912 de fin d'exécution de la fonction EXEC_SHIFTDO (STOP_SHIFTDO). Sinon, l'algorithme passe à l'étape 907.

L'étape 907 consiste à tester vérifier si le lien critique « CL » fait partie du même segment transparent « SS » (pour « Same Segment ») ou si le lien critique a changé de segment transparent lors de l'exécution de l'étape 905. Si c'est le cas, l'algorithme passe à l'étape 908 dans laquelle un autre test est effectué, sinon il passe à l'étape 909 dans laquelle le décalage descendant du site de régénération initié à l'étape 905 est accepté (la valeur de la variable R_index étant incrémentée de 1). Les paramètres R_index et Tab_regen_etat sont alors mis à jour en tenant compte du nouveau nœud relais régénérateur courant. Et l'algorithme retourne à l'étape 901 pour initier un nouveau test de recouvrement en tenant compte des paramètres mises à jour. La table Tab_Regen_etat contient une donnée relative au nouvel état courant de la table Tab_Regen après mise à jour (c'est-à-dire tenant compte du décalage effectué à l'étape 905).

L'étape 908 consiste à vérifier si la marge du rapport signal à bruit optique (OSNRmargin_old) obtenue pour le segment transparent précédent incluant le lien critique est supérieure à celle obtenue pour le segment transparent courant incluant le lien critique (OSNRmargin_new) après le décalage. Si c'est le cas, alors l'algorithme passe à l'étape 910 dans laquelle le ou les décalage(s) descendant(s) du site de régénération optique initié(s) depuis l'étape 621 n'est (ne sont) pas accepté(s) et l'algorithme passe à l'étape 912 de fin d'exécution de la fonction EXEC_SHIFTDO exécutée à l'étape 654. Sinon l'algorithme passe à l'étape 911 dans laquelle le ou les décalage(s) descendant(s) du site de régénération initié(s) depuis l'étape 621 est(sont) accepté(s) et les tables Tab_regen et Tab_OSNRmargin sont mises à jour en tenant compte du nouveau nœud relais régénérateur courant, et l'algorithme passe à l'étape 912 de fin d'exécution de la fonction EXEC_SHIFTDO exécutée à l'étape 654.

En revenant à présent à la figure 6F, l'étape 623 consiste à tester le cas particulier où la valeur de la variable M est égale à 0. Si M est égale à 0, l'algorithme passe à l'étape 625. Si non il passe à l'étape 627.

L'étape 625 consiste à vérifier si le lien critique « CL » fait partie du même segment transparent « SS » (pour « Same Segment ») ou si le lien critique a changé de segment transparent lors de l'exécution de fonction algorithmique EXEC_SHIFTDO (étape 654). Si c'est le cas, l'algorithme passe à l'étape 626 dans laquelle un autre test est effectué, sinon il passe à l'étape 627 dans laquelle le décalage descendant du site de régénération initié à l'étape 621 est accepté. Les tables Tab_regen et Tab_OSNRmargin sont alors mises à jour en tenant compte du nouveau nœud régénérateur courant, et l'algorithme retourne à l'étape 621 pour initier un nouveau décalage descendant du site de régénération potentiel.

L'étape 626 consiste à vérifier si la marge du rapport signal à bruit optique (OSNRmargin_old) obtenue pour le segment transparent précédent incluant le lien critique est supérieure à celle obtenue pour le segment transparent courant incluant le lien critique (OSNRmargin_new). Si c'est le cas, alors l'algorithme passe à l'étape 628 dans laquelle le décalage descendant du site de régénération initié à l'étape 601 n'est pas accepté. Sinon l'algorithme passe à l'étape 629 dans laquelle le décalage descendant du site de régénération initié à l'étape 621 est accepté et les tables Tab_regen et Tab_OSNRmargin sont mises à jour en tenant compte du nouveau nœud régénérateur courant. A l'issue de l'étape 628, l'algorithme passe dans l'étape 630 de fin d'exécution de l'étape 654 (fonction EXEC_SHIFTDO). De même, à l'issue de l'étape 629, l'algorithme passe dans l'étape 640 de fin d'exécution de l'étape 654 (fonction EXEC_SHIFTDO).

Le mode de réalisation particulier décrit ci-dessus en relation avec les figures 6D, 6E, 6F et 6G est basé sur une absence de contrainte quant au nombre de nœuds relais régénérateurs à déterminer.

La **figure 7** présente la structure simplifiée d'un dispositif 70 mettant en œuvre le procédé de détermination selon l'invention (par exemple le mode de réalisation particulier décrit ci-dessus en relation avec la figure 2). Ce dispositif comprend une mémoire vive 73 (par exemple une mémoire RAM), une unité de traitement 71, équipée par exemple d'un processeur, et pilotée par un programme d'ordinateur stocké dans une mémoire morte 72 (par exemple une mémoire ROM ou un disque dur). A l'initialisation, les instructions de code du programme d'ordinateur sont par exemple chargées dans la mémoire vive 73 avant d'être exécutées par le processeur de l'unité de traitement 71. L'unité de traitement 71 reçoit en entrée une requête 74 d'établissement d'une ligne de transmission entre un nœud émetteur et un nœud récepteur donnés du réseau optique. Le processeur de l'unité de traitement 71 traite la requête 74 et génère en sortie 75 l'ensemble des nœuds relais régénérateurs déterminés pour la ligne de transmission, selon les instructions du programme 72. L'unité de traitement 71 délivre en sortie le flux de données compressé 74.

Cette figure 7 illustre seulement une manière particulière, parmi plusieurs possibles, de réaliser les différents algorithmes détaillés ci-dessus, en relation avec les figures 2, 6A à 6G. En effet, la technique de l'invention se réalise indifféremment :

- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Le mode de réalisation décrit ci-dessus illustre la mise en œuvre du procédé de l'invention par un dispositif gestionnaire centralisé du réseau optique. Il est clair que de nombreux autres modes de réalisation de l'invention peuvent être envisagés. On peut notamment prévoir une mise en œuvre du procédé par un nœud optique du réseau (qu'il soit nœud émetteur, nœud récepteur ou nœud dispositif) ou encore un dispositif dédié à la mise en œuvre de ce procédé qu'il conviendrait d'implémenter dans le réseau optique.

**Revendications**

1. Procédé de détermination d'au moins un nœud relais régénérateur parmi une pluralité de nœuds relais compris dans une ligne de transmission optique (OTL) entre un nœud émetteur et un nœud récepteur, chaque nœud relais pouvant être contrôlé pour agir comme un nœud relais générateur ou comme un nœud relais non-générateur, ladite ligne de transmission comprenant une succession de liens (L1 - L5) reliant chacun deux nœuds successifs de la ligne de transmission, ledit procédé étant **caractérisé en ce qu'**il comprend les étapes suivantes :

- identifier (20), parmi les liens de ladite ligne de transmission, un lien critique au moyen de la détermination, pour chacun des liens de ladite ligne de transmission, de la valeur d'un paramètre reflétant un niveau de puissance optique pour ledit lien, le lien critique étant un desdits liens pour lequel la valeur du paramètre de puissance est la plus élevée ; et

- déterminer (30), en fonction du lien critique, au moins un nœud relais régénérateur au sein des nœuds d'extrémité délimitant les segments transparents d'une succession optimisée de segments transparents parmi une pluralité de successions possibles de segments transparents pour ladite ligne de transmission, chaque segment transparent comprenant un lien ou plusieurs liens successifs sans nœud relais régénérateur entre les liens successifs, ledit au moins un nœud relais régénérateur étant déterminé de telle sorte que le segment transparent comprenant le lien critique dans la succession optimisée de segments transparents présente un niveau de qualité de communication supérieur ou égal aux niveaux de qualité de communication des segments transparents comprenant le lien critique dans les successions possibles de segments transparents.

2. Procédé selon la revendication 1, comprenant une étape d'obtention (10) d'un schéma d'emplacement prédéterminé de nœuds d'extrémité d'une première succession possible de segments transparents, ladite étape de détermination (30) des nœuds d'extrémité étant effectuée en fonction dudit schéma d'emplacement prédéterminé.

3. Procédé selon l'une quelconque des revendications 1 et 2, dans lequel ladite étape de détermination (30) des nœuds d'extrémité est effectuée dans un sens ascendant et/ou un sens descendant de la ligne de transmission en fonction d'une position du lien critique dans la succession de liens compris dans la ligne de transmission.

4. Procédé selon la revendication 3, dans lequel ladite étape de détermination (30) des nœuds d'extrémité est en outre effectuée en fonction d'un critère de qualité de communication.

5. Procédé selon l'une quelconque des revendications 3 et 4, dans lequel, si le lien critique est positionné dans un segment transparent d'extrémité de la ligne de transmission comprenant ledit nœud émetteur, ladite étape de détermination des nœuds d'extrémité est effectuée dans le sens ascendant de la ligne de transmission.

6. Procédé selon l'une quelconque des revendications 3 et 4, dans lequel, si le lien critique est positionné dans un segment transparent d'extrémité de la ligne de transmission comprenant ledit nœud récepteur, ladite étape de détermination des nœuds d'extrémité est effectuée dans le sens descendant de la ligne de transmission.

7. Procédé selon l'une quelconque des revendications 3 et 4, dans lequel, si le lien critique est positionné dans un segment transparent intermédiaire de ladite succession de segments transparents, ladite étape de détermination des nœuds d'extrémité est effectuée dans le sens descendant puis dans le sens ascendant de la ligne de transmission.

8. Procédé selon l'une quelconque des revendications 1 à 7, dans lequel le lien critique est le lien parmi les liens de la ligne de transmission ayant le niveau de puissance optique le plus élevé.

9. Procédé selon l'une quelconque des revendications 1 à 8, dans lequel le niveau de qualité de communication d'un segment transparent est représenté par une marge de rapports signal à bruit dudit segment transparent.

10. Produit programme d'ordinateur, comprenant des instructions de code de programme pour la mise en œuvre du procédé selon au moins une des revendications 1 à 9, lorsque ledit programme est exécuté sur un ordinateur.

11. Médium de stockage lisible par ordinateur, stockant un produit programme d'ordinateur selon la revendication 10.

12. Dispositif de détermination d'au moins un nœud relais régénérateur parmi une pluralité de nœuds relais compris dans une ligne de transmission optique (OTL) entre un nœud émetteur et un nœud récepteur, chaque nœud relais pouvant être contrôlé pour agir comme un nœud relais générateur ou comme un nœud relais non-générateur, ladite ligne de transmission comprenant une succession de liens (L1 - L5) reliant chacun deux nœuds successifs de la ligne de transmission, ledit dispositif étant **caractérisé en ce qu'**il comprend :

- des moyens d'identification, parmi les liens de ladite ligne de transmission, d'un lien critique au moyen de la détermination, pour chacun des liens de ladite ligne de transmission, de la valeur d'un paramètre reflétant un niveau de puissance optique pour ledit lien, le lien critique étant un desdits liens pour lequel la valeur du paramètre de puissance est la plus élevée ; et

- des moyens de détermination, tenant compte du lien critique, d'au moins un nœud relais régénérateur au sein des nœuds d'extrémité délimitant les segments transparents d'une succession optimisée de segments transparents parmi une pluralité de successions possibles de segments transparents pour ladite ligne de transmission, chaque segment transparent comprenant un lien ou plusieurs liens successifs sans nœud relais régénérateur entre les liens successifs, ledit au moins un nœud relais régénérateur étant déterminé de telle sorte que le segment transparent comprenant le lien critique dans la succession optimisée de segments transparents présente un niveau de qualité de communication supérieur ou égal aux niveaux de qualité de communication des segments transparents comprenant le lien critique dans les successions possibles de segments transparents.

**Patentansprüche**

1. Verfahren zur Bestimmung mindestens eines Regenerator-Relaisknotens unter einer Vielzahl von Relaisknoten, die in einer optischen Übertragungsleitung (OTL) zwischen einem Sendeknoten und einem Empfangsknoten enthalten sind, wobei jeder Relaisknoten gesteuert werden kann, um als Generator-Relaisknoten oder als nicht-Generator-Relaisknoten zu arbeiten, wobei die Übertragungsleitung eine Folge von Verknüpfungen (L1 - L5) enthält, die je zwei aufeinanderfolgende Knoten der Übertragungsleitung verbinden, wobei das Verfahren **dadurch gekennzeichnet ist, dass** es die folgenden Schritte enthält:

   - Erkennen (20) einer kritischen Verknüpfung unter den Verknüpfungen der Übertragungsleitung mittels der Bestimmung des Werts eines ein optisches Leistungsniveau für die Verknüpfung reflektierenden Parameters für jede der Verknüpfungen der Übertragungsleitung, wobei die kritische Verknüpfung eine der Verknüpfungen ist, für die der Wert des Leistungsparameters am höchsten ist; und
   - Bestimmen (30), abhängig von der kritischen Verknüpfung, mindestens eines Regenerator-Relaisknotens innerhalb der Endknoten, die die transparenten Segmente einer optimierten Folge von transparenten Segmenten unter einer Vielzahl von möglichen Folgen von transparenten Segmenten für die Übertragungsleitung begrenzen, wobei jedes transparente Segment eine Verknüpfung oder mehrere aufeinanderfolgende Verknüpfungen ohne Regenerator-Relaisknoten zwischen den aufeinanderfolgenden Verknüpfungen enthält, wobei der mindestens eine Regenerator-Relaisknoten so bestimmt wird, dass das die kritische Verknüpfung enthaltende transparente Segment in der optimierten Folge von transparenten Segmenten ein Kommunikationsqualitätsniveau höher als die oder gleich den Kommmunikationsqualitätsniveaus der die kritische Verknüpfung enthaltenden transparenten Segmente in den möglichen Folgen transparenter Segmente aufweist.

2. Verfahren nach Anspruch 1, das einen Schritt des Erhalts (10) eines vorbestimmten Standortschemas von Endknoten einer ersten möglichen Folge von transparenten Segmenten enthält, wobei der Bestimmungsschritt (30) der Endknoten abhängig vom vorbestimmten Standortschema ausgeführt wird.

3. Verfahren nach einem der Ansprüche 1 und 2, wobei der Bestimmungsschritt (30) der Endknoten in aufsteigender und/oder absteigender Richtung der Übertragungsleitung abhängig von einer Position der kritischen Verknüpfung in der Folge von Verknüpfungen ausgeführt wird, die in der Übertragungsleitung enthalten sind.

4. Verfahren nach Anspruch 3, wobei der Bestimmungsschritt (30) der Endknoten außerdem abhängig von einem Kriterium der Kommunikationsqualität ausgeführt wird.

5. Verfahren nach einem der Ansprüche 3 und 4, wobei, wenn die kritische Verknüpfung in einem den Sendeknoten enthaltenden transparenten Endsegment der Übertragungsleitung positioniert ist, der Bestimmungsschritt der Endknoten in aufsteigender Richtung der Übertragungsleitung ausgeführt wird.

6. Verfahren nach einem der Ansprüche 3 und 4, wobei, wenn die kritische Verknüpfung in einem den Empfangsknoten enthaltenden transparenten Endsegment der Übertragungsleitung positioniert ist, der Bestimmungsschritt der Endknoten in absteigender Richtung der Übertragungsleitung ausgeführt wird.

7. Verfahren nach einem der Ansprüche 3 und 4, wobei, wenn die kritische Verknüpfung in einem transparenten Zwischensegment der Folge von transparenten Segmenten positioniert ist, der Bestimmungsschritt der Endknoten in absteigender und dann in aufsteigender Richtung der Übertragungsleitung ausgeführt wird.

8. Verfahren nach einem der Ansprüche 1 bis 7, wobei die kritische Verknüpfung die Verknüpfung unter den Verknüpfungen der Übertragungsleitung ist, die den höchsten optischen Leistungspegel hat.

9. Verfahren nach einem der Ansprüche 1 bis 8, wobei das Kommunikationsqualitätsniveau eines transparenten Segments durch einen Spielraum von Signal/Rausch-Verhältnissen des transparenten Segments dargestellt wird.

10. Computerprogrammprodukt, das Programmcodeanweisungen zur Durchführung des Verfahrens nach mindestens einem der Ansprüche 1 bis 9 enthält, wenn das Programm auf einem Computer ausgeführt wird.

11. Computerlesbares Speichermedium, das ein Computerprogrammprodukt nach Anspruch 10 speichert.

12. Vorrichtung zur Bestimmung mindestens eines Regenerator-Relaisknotens unter einer Vielzahl von Relaisknoten, die in einer optischen Übertragungsleitung (OTL) zwischen einem Sendeknoten und einem Empfangsknoten enthalten sind, wobei jeder Relaisknoten gesteuert werden kann, um als Generator-Relaisknoten oder als nicht-Generator-Relaisknoten zu arbeiten, wobei die Übertragungsleitung eine Folge von Verknüpfungen (L1 - L5) enthält, die je zwei aufeinanderfolgende Knoten der Übertragungsleitung verbinden, wobei die Vorrichtung **dadurch gekennzeichnet ist, dass** sie enthält:

- Einrichtungen zur Erkennung einer kritischen Verknüpfung unter den Verknüpfungen der Übertragungsleitung mittels der Bestimmung, für jede der Verknüpfungen der Übertragungsleitung, des Werts eines Parameters, der einen optischen Leistungspegel für die Verknüpfung reflektiert, wobei die kritische Verknüpfung eine der Verknüpfungen ist, für die der Wert des Leistungsparameters am höchsten ist; und
- Einrichtungen zur Bestimmung, unter Berücksichtigung der kritischen Verknüpfung, mindestens eines Regenerator-Relaisknotens innerhalb der Endknoten, die die transparenten Segmente einer optimierten Folge von transparenten Segmenten unter einer Vielzahl von möglichen Folgen von transparenten Segmenten für die Übertragungsleitung begrenzen, wobei jedes transparente Segment eine Verknüpfung oder mehrere aufeinanderfolgende Verknüpfungen ohne Regenerator-Relaisknoten zwischen den aufeinanderfolgenden Verknüpfungen enthält, wobei der mindestens eine Regenerator-Relaisknoten so bestimmt wird, dass das die kritische Verknüpfung enthaltende transparente Segment in der optimierten Folge von transparenten Segmenten ein Kommunikationsqualitätsniveau höher als die oder gleich den Kommunikationsqualitätsniveaus der die kritische Verknüpfung enthaltenden transparenten Segmente in den möglichen Folgen von transparenten Segmenten aufweist.

**Claims**

1. Method for determining at least one regenerative relay node from among a plurality of relay nodes included in an optical transmission line (OTL) between a transmitting node and a receiving node, each relay node being able to be controlled so as to act as a generative relay node or a non-generative relay node, said transmission line comprising a succession of links (L1 - L5) each connecting two successive nodes of the transmission line, said method being **characterized in that** it comprises the following steps:

- identifying (20), from among the links of said transmission line, a critical link by determining, for each of the links of said transmission line, the value of a parameter that reflects an optical power level for said link, the critical link being one of said links for which the value of the power parameter is the highest; and
- determining (30), according to the critical link, at least one regenerative relay node within the end nodes delimiting the transparent segments of an optimized succession of transparent segments from among a plurality of possible successions of transparent segments for said transmission line, each transparent segment comprising a link or a plurality of successive links without a regenerative relay node between the successive links, said at least one regenerative relay node being determined such that the transparent segment comprising the critical link in the optimized succession of transparent segments has a communication quality level that is higher than or equal to the communication quality levels of the transparent segments comprising the critical link in the possible successions of transparent segments.

2. Method according to Claim 1, comprising a step of obtaining (10) a predetermined location diagram of end nodes of a first possible succession of transparent segments, said step of determining (30) the end nodes being performed according to said predetermined location diagram.

3. Method according to either of Claims 1 and 2, wherein said step of determining (30) the end nodes is performed in an upward direction and/or a downward direction of the transmission line according to a position of the critical link in the succession of links included in the transmission line.

4. Method according to Claim 3, wherein said step of determining (30) the end nodes is further performed according to a communication quality criterion.

**5.** Method according to either of Claims 3 and 4, wherein, if the critical link is positioned in an end transparent segment of the transmission line including said transmitting node, said step of determining the end nodes is performed in the upward direction of the transmission line.

**6.** Method according to either of Claims 3 and 4, wherein, if the critical link is positioned in an end transparent segment of the transmission line including said receiving node, said step of determining the end nodes is performed in the downward direction of the transmission line.

**7.** Method according to either of Claims 3 and 4, wherein, if the critical link is positioned in an intermediate transparent segment of said succession of transparent segments, said step of determining the end nodes is performed in the downward direction then in the upward direction of the transmission line.

**8.** Method according to any one of Claims 1 to 7, wherein the critical link is the link from among the links of the transmission line that has the highest optical power level.

**9.** Method according to any one of Claims 1 to 8, wherein the communication quality level of a transparent segment is represented by a signal-to-noise ratio margin of said transparent segment.

**10.** Computer program product, comprising program code instructions for implementing the method according to at least one of Claims 1 to 9, when said program is executed on a computer.

**11.** Computer-readable storage medium, storing a computer program product according to Claim 10.

**12.** Device for determining at least one regenerative relay node from among a plurality of relay nodes included in an optical transmission line (OTL) between a transmitting node and a receiving node, each relay node being able to be controlled so as to act as a generative relay node or a non-generative relay node, said transmission line comprising a succession of links (L1 - L5) each connecting two successive nodes of the transmission line, said device being **characterized in that** it comprises:

    - means for identifying, from among the links of said transmission line, a critical link by determining, for each of the links of said transmission line, the value of a parameter that reflects an optical power level for said link, the critical link being one of said links for which the value of the power parameter is the highest; and
    - means for determining, considering the critical link, at least one regenerative relay node within the end nodes delimiting the transparent segments of an optimized succession of transparent segments from among a plurality of possible successions of transparent segments for said transmission line, each transparent segment comprising a link or a plurality of successive links without a regenerative relay node between the successive links, said at least one regenerative relay node being determined such that the transparent segment comprising the critical link in the optimized succession of transparent segments has a communication quality level that is higher than or equal to the communication quality levels of the transparent segments comprising the critical link in the possible successions of transparent segments.

Figure 1

Figure 2

**Figure 3**

**Figure 4**

**Figure 5**

61

OBT_TS
IND_CL

S = 3; C = 1; M = 2; N = 2
Tab_regen = C, E
Tab_OSNRmargin = 1, 1, 10
Tab_OSNRlink = 25, 16.6, 25,
16.6, 25

62

POS CL = FS ?

+

63

EXEC_UA

-

64

POS CL = LS ?

+

65

EXEC_DA

-

66

EXEC_DA & EXEC_UA

## Figure 6A

63

631

j = 0

636

STOP_UA

-

632

M > 0

+

633

M = M-1

634

EXEC_SHIFTUP

635

j = j + 1

## Figure 6B

65

651

j = 1

656

STOP_UD

-

652

M > 0

+

653

M = M-1

654

EXEC_SHIFTDO

655

j = j+ 1

## Figure 6C

Figure 6D

**Figure 6E**

654

SHIFTDO (j) — 621

OSNRnew > OSNRmin ? — 622

STOP_SHIFTDO — 624

R_index = j — 952

Tab_Regen[j] = RN ? — 953

Test_Rec (R_index = j, Tab_regen_etat) — 954

M == 0 — 623

ACC_SHIFT
UPDATE Tab_regen & Tab_OSNRmargin — 627

CL ∈ SS ? — 625

OSNRmargin_old > OSNRmargin_new ? — 626

NACC_SHIFT — 628

STOP_SHIFTDO — 630

ACC_SHIFT
UPDATE Tab_regen & Tab_OSNRmargin — 629

STOP_SHIFTDO — 640

**Figure 6F**

954

Test_Rec (R_index, Tab_regen_etat)          901

R_index<N ?          902

STOP Test_Rec          904

Tab_Regen[R_index] = Tab_Regen[R_index+1] ?          903

SHIFTDO (R_index +1)          905

Tab_Regen[R_index +1] = RN?          906

CL ∈ SS ?          907

UPDATE (R_index = R_index +1, Tab_regen_etat)          909

OSNRmargin_old > OSNRmargin_new ?          908

ACC_SHIFT UPDATE Tab_regen & Tab_OSNRmargin          911

NACC_SHIFT          910

STOP_SHIFTDO          912

**Figure 6G**

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. AMAR.** On the Legacy Amplifier Limitation in Flexgrid Optical Networks. *Photonics in Switching Conference,* 2015